# EUROPÄISCHE PATENTSCHRIFT

(11) **EP 2 104 807 B1**
(45) Veröffentlichungstag und Bekanntmachung des Hinweises auf die Patenterteilung: **10.05.2017**
(21) Anmeldenummer: 07847243.8
(22) Anmeldetag: 21.11.2007
(51) Int. Cl.: F24F 11/00, F24F 7/06

(54) **SICHERHEITSSCHALTUNGSANORDNUNG, HAUSHALTSGERÄT SOWIE VERFAHREN ZUM SICHEREN BETRIEB EINES HAUSHALTSGERÄTES**
SAFETY CIRCUIT ARRANGEMENT, HOUSEHOLD APPLIANCE, AND METHOD FOR SAFELY OPERATING A HOUSEHOLD APPLIANCE
DISPOSITIF DE COMMUTATION DE SÉCURITÉ, APPAREIL MÉNAGER AINSI QUE PROCÉDÉ POUR LE FONCTIONNEMENT SÛR D'UN APPAREIL MÉNAGER

(30) Priorität: 21.12.2006 DE 102006060744
(43) Veröffentlichungstag der Anmeldung: 30.09.2009
(73) Patentinhaber: BSH Hausgeräte GmbH, 81739 München (DE)
(72) Erfinder: GRAW, Martin, 75203 Königsbach-stein (DE); UEBELE, Volkmar, 61231 Bad Nauheim (DE)
(86) Internationale Anmeldenummer: PCT/EP2007/062611
(87) Internationale Veröffentlichungsnummer: WO 2008/077691

(56) Entgegenhaltungen:
- DE-A1- 10 260 804
- DE-U1- 20 307 536
- DE-U1- 20 317 930
- US-A- 3 729 735
- US-A- 5 226 256
- US-B1- 6 304 046

## Beschreibung

Die vorliegende Erfindung betrifft ein Haushaltsgerät mit einer Abluftvorrichtung zur Abführung von Luft aus einem Raum.

DE 203 07 536 U1 beschreibt eine Anordnung zum sicheren Betreiben eines Abluftsystems. Bei dieser Anordnung werden eine Schalteinrichtung und eine Kopplung zum Verbinden einer Spannungszuführleitung eines Abluftsystems und einer Versorgungsleitung in einem verschließbaren Gehäuse angeordnet. Die Schalteinheit dient dazu die Versorgung des Abluftsystems mit elektrischer Energie zu unterbinden, wenn ein entsprechendes Signal von einem Steuerglied, das den Öffnungszustand eines Zuluftsystems überwacht, empfangen wird. Die Zufuhr elektrischer Energie zu dem Abluftsystem wird ermöglicht, indem die Spannungszuführungsleitung mit einem Geräteanschluss des Abluftsystems verbunden ist.

Ein Nachteil dieser bekannten Anordnung besteht darin, dass die Unterbrechung der Energieversorgung vor der Versorgungsleitung für das Abluftsystem erfolgt. Bei Empfang eines entsprechenden Signals, ist also das gesamte Abluftsystem nicht mit elektrischer Energie versorgt. Es können jedoch Komponenten oder Funktionen an dem Abluftsystem, wie beispielsweise eine Beleuchtung, die Möglichkeit der Ableitung einer geringen Menge von Luft und dergleichen, vorgesehen sein, die auch bei unzureichender Zuluftzufuhr weiterhin funktionsfähig beziehungsweise nutzbar sein sollten. Zudem ist bei der bekannten Anordnung eine Kopplung der Versorgungsleitung mit der Spannungszuführleitung erforderlich. Diese ist vorzugsweise als Steckkontakt ausgebildet. Aufgrund der erforderlichen Kopplung zwischen der Versorgungsleitung und der Spannungszuführleitung wird ein Sicherheitsrisiko geschaffen, da es für einen Benutzer möglich ist diese Kopplung zu trennen und das Abluftsystem an eine andere Versorgungsleitung anzuschließen, an der keine Schalteinrichtung vorgesehen ist. Um dies zu verhindern werden die Komponenten im Stand der Technik in ein verschließbares Gehäuse eingebracht. Dies erfordert aber aufgrund der einfachen Umgehung der Schalteinrichtung durch Lösen der Kopplung eine zusätzliche Sicherheitsvorrichtung zur Überwachung des Verschlusses des Gehäuses.

In der DE 203 17 930 U1 ist weiterhin ein Sicherheits-Abluftsystem beschrieben, das ein Steuerglied und eine von dem Steuerglied gesteuerte Schalteinrichtung zum Öffnen / Schließen der elektrischen Verbindung einer Gebläseeinrichtung mit dem Energieanschluss aufweist. Zumindest das Steuerglied ist in einem Einsteckbauteil angeordnet, welches in eine Einsteckaufnahme an dem Gehäusebauteil lösbar einsteckbar ist. Auch bei dieser Anordnung besteht somit die Gefahr der Manipulation des Sicherheits-Abluftsystems durch den Benutzer.

Aufgabe der vorliegenden Erfindung ist es daher eine Lösung zu schaffen, mit der ein sicherer Betrieb einer Abluftvorrichtung eines Haushaltsgerätes auf einfache und zuverlässige Weise realisiert werden kann.

Die Aufgabe wird gelöst durch ein Haushaltsgerät gemäß Anspruch 1.

Durch die Integration des Sicherheitsmoduls in die Stromführung und/oder Steuerung innerhalb des Haushaltsgerätes wird die Gefahr einer Manipulation der Anordnung durch den Benutzer verhindert. Ein einfaches Umstecken eines Kabels von einer gesicherten Vorrichtung in eine normale Steckdose, wie dies bei der Anordnung gemäß des Standes der Technik möglich ist, scheidet bei der Integration des Sicherheitsmoduls in die Stromführung und/oder Steuerung innerhalb des Haushaltsgerätes aus. Zudem sind in der Regel die Stromführungs- und Steuerungselemente eines Haushaltsgerätes zum Schutz vor Umgebungseinflüsse, wie beispielsweise Verschmutzung und Erwärmung in einem abgeschlossenen Gehäuse vorgesehen. Ein zusätzliches Vorsehen und Überwachen eines verschließbaren Gehäuses für das Sicherungsmodul ist daher nicht erforderlich. Weiterhin kann das Sicherheitsmodul so in die Steuerung und/oder Stromführung des Haushaltsgerätes eingebunden werden, dass eine Unterbrechung der Stromzufuhr nur für einzelne Komponenten des Haushaltsgerätes durchgeführt wird, wohingegen andere Komponenten, wie beispielsweise eine Beleuchtungseinrichtung, auch bei Unterbrechung der Stromzufuhr weiterhin möglich ist.

Zudem ist es durch die Integration des Sicherheitsmoduls innerhalb des Haushaltsgerätes, beispielsweise einer Dunstabzugshaube, auch möglich, außer der Unterbrechung der Gesamtstromzufuhr für das Abluftsystem die Information über Luftverhältnisse in dem Raum, in dem das Haushaltsgerät betrieben wird, in dem Haushaltsgerät auf einfache Weise anderweitig zu verwenden. Beispielsweise können statt der Unterbrechung der Stromzufuhr zu dem Antriebsmotor lediglich ein oder mehrere Betriebszustände des Antriebsmotors des Abluftsystems unterbunden werden. Schließlich kann durch die Integration des Sicherheitsmoduls innerhalb des Haushaltsgerätes eine schnelle Reaktion auf die Änderung der Luftverhältnisse in den Raum gewährleistet werden. Es ist beispielsweise möglich lediglich einen Leiter der Stromzufuhr zu unterbrechen, so dass bei Änderung der Luftverhältnisse, die einen Betrieb der Abluftvorrichtung erlaubt unmittelbar eine gewünschte Leistungsstufe des Antriebsmotors realisiert wird.

Das Haushaltsgerät kann beispielsweise eine Dunstabzugshaube, einen Wäschetrockner und dergleichen darstellen. Die Erfindung wird im Folgenden im Wesentlichen unter Bezugnahme auf eine Dunstabzugshaube beschrieben. Die Funktionsweise und die Vorteile der Erfindung gelten aber für andere Haushaltsgeräte entsprechend. Als Abluftvorrichtung wird vorzugsweise ein Abluftgebläse bezeichnet, durch das Luft aus einem Raum, beispielsweise einer Küche oder ein Waschraum, nach außen in die Umgebung abgeführt wird. Das Abluftgebläse wird durch einen Antriebsmotor abgetrieben. Die Leistungselektronik umfasst im wesentlichen Elemente zum Betrieb der Abluftvorrichtung und zur Einstellung gewünschter Lüfterstufen. Das mindestens eine Unterbrechungselement kann als Relais, beispielsweise Transistor, FET, Thyristor, Triac und dergleichen ausgestaltet sein. Besonders bevorzugt ist das Unterbrechungselement ein Schließer, das heißt einen NO (normally open) Schalter. Hierdurch wird gewährleistet, dass die Stromzufuhr zu einer Komponente der Abluftvorrichtung nur dann erfolgt, wenn ein entsprechendes Signal von dem Überwachungssystem empfangen wurde. Das Überwachungssystem stellt beispielsweise ein Sensorsystem dar, bei dem Sensoren die Luftverhältnisse in dem Raum, in dem das Haushaltsgerät betrieben wird, erfassen. Alternativ kann das Überwachungssystem aber auch ein Sensorsystem sein, bei dem Sensoren den Öffnungszustand einer Zuluftvorrichtung oder den Zuluftzuführungsgrad erfassen. Die Sensorsignale können verarbeitet oder unverarbeitet an das Sicherheitsmodul übermittelt werden. Die Übermittlung kann per Funk oder kabelgebunden erfolgen. Die Zuluftvorrichtung kann beispielsweise ein Fenster, eine Lüftungsklappe, eine Klimaanlage oder ein Zuluftgebläse darstellen.

Das Sicherheitsmodul ist vorzugsweise als Hardwarekomponente ausgeführt, das heißt dieses kann beispielsweise eine Schaltungsplatine oder einen Teil einer Schaltungsplatine darstellen. Der Vorteil der Ausführung des Sicherheitsmoduls als Hardwarekomponente liegt zum einen in der erhöhten Sicherheit gegen Manipulation im Vergleich zu einer Software-Realisierung. Zum anderen kann eine Hardwarekomponente einfach in die Stromführung und Steuerung des Haushaltsgerätes integriert werden.

Gemäß einer Ausführungsform ist das Sicherheitsmodul mit einem Modul für die Leistungselektronik verbunden. Durch den modularen Aufbau der einzelnen Komponenten der Sicherheitsschaltungsanordnung kann das Sicherheitsmodul auf einfache Weise als Nachrüstmodul in ein Haushaltsgerät eingebracht werden, ohne, dass erhebliche Modifikationen an der Stromführung oder Steuerung des Haushaltsgerätes notwendig sind. Die Module können beispielsweise als Platinen ausgestaltet sein.

Das Sicherheitsmodul ist vorzugsweise der Leistungselektronik der Abluftvorrichtung nachgeschaltet. Hierdurch wird es zum einen ermöglicht die Leistungselektronik für die Abluftvorrichtung mit der Leistungselektronik für weitere Komponenten des Haushaltsgerätes zu kombinieren, da eine gegebenenfalls erforderliche Unterbrechung der Stromzuführung zu dem Antriebsmotor des Abluftsystems erst nach der Leistungselektronik erfolgt. Zum anderen kann durch diese Schaltung des Sicherheitsmoduls auch bei Versagen gegebenenfalls in der Leistungselektronik vorgesehener zusätzlicher Sicherheitsmaßnahmen ein zuverlässiges Abschalten der Stromzuführung zu dem Antriebsmotor des Abluftsystems realisiert werden. Besonders bevorzugt ist das Sicherheitsmodul daher unmittelbar einem Antriebsmotor der Abluftvorrichtung vorgeschaltet.

Gemäß einer Ausführungsform weist die Sicherheitsschaltungsanordnung ein Bedienmodul zur Bedienung der Abluftvorrichtung auf und das Bedienmodul ist mittelbar oder unmittelbar mit dem Sicherheitsmodul verbunden. Bei dieser Ausführungsform kann neben einer gegebenenfalls erforderlichen Abschaltung der Stromzuführung zu dem Antriebsmotor der Abluftvorrichtung das Auswählen einzelner Lüfterstufen verhindert werden. Empfängt eine Steuereinheit des Bedienelementes ein Signal von einer Steuereinheit des Sicherheitsmoduls oder gegebenenfalls von einer Steuereinheit der Leistungselektronik, so kann aufgrund dieses Signals beispielsweise das Auswählen hoher Lüfterstufen verhindert werden, wohingegen ein Auswählen einer geringen Lüfterstufe weiterhin möglich sein kann. Diese Ausführungsform kann zum Einsatz kommen, wenn an dem Überwachungssystem nicht ausschließlich das Vorhandensein einer Luftzufuhr überwacht wird, sondern zusätzlich auch der Grad der gewährleisteten Zuluftzufuhr beziehungsweise der Grad der Luftqualität, insbesondere der CO-Gehalt in der Luft, ermittelt wird.

Gemäß einer Ausführungsform wird nur ein Teil der Leiter der Stromführung, insbesondere der N-Leiter, über das Sicherheitsmodul geführt. Durch diese Leiterführung kann das Sicherheitsmodul einen einfachen Aufbau aufweisen. Insbesondere kann in der Verbindung des über das Sicherheitsmodul geführten Leiters der Stromzuführung mindestens ein Unterbrechungselement vorgesehen sein. Der über das Sicherheitsmodul zu führende Leiter wird bei dieser Ausführungsform vorzugsweise von dem Motoranschlusskabel abgezweigt. Der Vorteil der Auslagerung eines Unterbrechungselementes auf das Sicherheitsmodul und das Führen eines Leiters der Stromführung über das Sicherheitsmodul weist den Vorteil auf, dass das Sicherheitsmodul zum einen vor dessen Einsatz in dem Haushaltsgerät zumindest bezüglich der Funktionsfähigkeit des Unterbrechungselementes überprüft und zugelassen werden kann. Hierdurch kann den strengen Sicherheitsmaßnahmen, die an Geräte mit Abluftvorrichtungen gestellt werden, Rechnung getragen werden und ein zuverlässiges Abschalten des Motors gewährleistet werden.

Alternativ können alle an einem Antriebsmotor der Abluftvorrichtung anliegenden Leiter über das Sicherheitsmodul geführt werden, auf dem für einen der Leiter, insbesondere den N-Leiter, mindestens ein Unterbrechungselement vorgesehen sein. In diesem Fall ist die Abzweigung eines Leiters von dem Kabel der Leistungselektronik nicht erforderlich. In diesem Fall kann vielmehr die Unterbrechung eines der Leiter durch eine entsprechende Belegung von Anschlüssen in der Leistungselektronik und dem Sicherheitsmodul sichergestellt werden. Bei dieser Ausführungsform ist die Überprüfung der Funktionsfähigkeit des Sicherheitsmoduls auf noch einfachere Weise überprüfbar.

Vorzugsweise ist bei dieser Ausführungsform zudem die Belegung der Anschlüsse auf dem Sicherheitsmodul und die Belegung der Anschlüsse auf dem Modul der Leistungselektronik identisch. Durch diesen Aufbau der Module kann das Sicherheitsmodul als reiner Adapter fungieren, der zwischen den Antriebsmotor der Abluftvorrichtung und die Leistungselektronik eingebracht werden kann. Das Ablösen der Anschlüsse des Antriebsmotors von der Leistungselektronik, Einstecken an dem Sicherheitsmodul und Überbrücken von Anschlüssen des Sicherheitsmoduls mit den Anschlüssen der Leistungselektronik erfolgen.

Obwohl es möglich ist ein Unterbrechungselement auf dem Sicherheitsmodul und ein weiteres Unterbrechungselement beispielsweise in der Leistungselektronik vorzusehen, weist gemäß einer Ausführungsform vorzugsweise das Sicherheitsmodul zumindest zwei Unterbrechungselemente auf, die jeweils einen Eingang für Signale des Überwachungssystems zur Überwachung der Luftverhältnisse aufweisen. Indem zwei Unterbrechungselemente vorgesehen sind, die jeweils ein Signal von dem Überwachungssystem erhalten, insbesondere über einen entsprechenden, gegebenenfalls gemeinsamen Treiber, kann auch bei Versagen eines der Unterbrechungselemente ein sicheres Abschalten des Antriebsmotors des Abluftsystems gewährleistet werden. Das Versagen von Unterbrechungssystem kann beispielsweise durch ein Verkleben beziehungsweise Hängen eines Relais auftreten.

Vorzugsweise weist das Sicherheitsmodul eine Steuerungseinheit auf. Die Steuerungseinheit, die als Mikroprocessor ausgestaltet sein kann, kann zur Ansteuerung des mindestens einen Unterbrechungselementes dienen. Zudem kann die Steuerungseinheit auch mit anderen Steuerungseinheiten des Haushaltsgerätes verbunden sein. Hierdurch wird es möglich das Erkennen eines Signals von der Überwachungseinheit an unterschiedlichen Stellen innerhalb der Steuerung des Haushaltsgerätes zu nutzen. Beispielsweise kann das Auftreten eines kritischen Zustandes der Luft in dem Raum und das Abschalten des Antriebsmotors des Abluftsystems an einer Anzeigevorrichtung, die über das Bedienmodul betrieben wird, dem Benutzer zur Kenntnis gebracht werden. Die Kommunikation der Steuereinheit des Sicherheitsmoduls mit dem Bedienmodul kann über Funk oder kabelgebunden erfolgen.

Das Sicherheitsmodul und zumindest ein Bedienmodul können hierzu jeweils eine Steuerungseinheit aufweisen. Das Bedienmodul dient insbesondere zur Einstellung der Abluftvorrichtung durch den Benutzer. Durch das Vorsehen einer Steuerungseinheit auf dem Bedienmodul können beispielsweise einzelne Lüfterstufen des Abluftsystems bereits an dem Bedienmodul deaktiviert werden. Dies bedeutet, dass der Benutzer einzelne Lüfterstufen nicht einstellen kann. Die Steuerungseinheit auf dem Bedienmodul ist vorzugsweise mit der Steuerungseinheit auf dem Sicherheitsmodul verbunden. Hierdurch kann ein zuverlässiges Deaktivieren geeigneter Lüfterstufen bei Erkennen eines bestimmten Zustandes des Zuluftsystems erfolgen. Zudem können aufgrund der Verbindung dieser beiden Steuereinheiten Informationen oder Warnungen über das Bedienmodul an einer Anzeige oder akustischen Ausgabevorrichtung dem Benutzer zur Kenntnis gebracht werden. Zusätzlich kann auf einem Modul für die Leistungselektronik eine weitere Steuerungseinheit vorgesehen sein. Dieses kann der Kommunikation zwischen dem Sicherheitsmodul und dem Bedienmodul zwischengeschaltet sein.

Zusätzlich oder alternativ, kann das Sicherheitsmodul mit einer Einstellvorrichtung zur Einstellung der Betriebsart des Haushaltsgerätes, insbesondere zur Einstellung der Luftführung in dem Haushaltsgerät, verbunden sein. Diese Verbindung kann mittelbar zwischen der Steuerungseinheit des Sicherheitsmoduls oder unmittelbar beispielsweise über eine Steuerungseinheit der Leistungselektronik erfolgen. Bei dieser Ausführungsform ist es möglich statt einer Abschaltung des Antriebsmotors des Abluftsystems die Betriebsart des Abluftsystems zu ändern. So kann bei Empfang eines Signals des Überwachungssystems, das auf eine kritische Situation hindeutet von einem Abluftbetrieb des Abluftsystems auf einen Umluftbetrieb des Abluftsystems umgeschaltet werden. Auf diese Weise kann das Abluftsystem auch bei ungünstigen Luftverhältnissen betrieben werden. Diese Ausführungsform ist aufgrund der Integration des Sicherheitsmoduls in die Stromführung und/oder Steuerung in dem Haushaltsgerät möglich. Nur aufgrund dieser Integration kann ein Umschalten des Betriebszustandes bei Empfang eines entsprechenden Signals initiiert und ein Abschalten des Abluftsystems verhindert werden.

Weiterhin kann das Sicherheitsmodul mit einer Aktorik zum Betätigen einer Zuluftvorrichtung verbunden sein. Die Aktorik dient beispielsweise dazu eine Klappe einer Zuluftvorrichtung zu öffnen. Erfolgt dies aufgrund eines an dem Sicherheitsmodul empfangenen Signals des Überwachungssystems, so kann gleichzeitig eine gegebenenfalls zuvor durchgeführte Abschaltung des Antriebsmotors oder Umschaltung der Betriebsart des Abluftsystems aufgehoben beziehungsweise rückgängig gemacht werden. Somit wird die Anzahl der Situationen, in denen das Abluftsystem von dem Benutzer nicht betrieben werden kann, weiter minimiert.

Die Vorteile der Integration des Sicherheitsmoduls innerhalb des Haushaltsgerätes wurden bereits unter Bezugnahme auf die Sicherheitsschaltungsanordnung beschrieben und gelten für das Haushaltsgerät entsprechend. Insbesondere kann die Sicherheit der Abschaltung der Abluftvorrichtung erhöht, die Gefahr der Manipulation durch den Benutzer verringert und die Bedienung benutzerfreundlich ausgestaltet werden.

Gemäß einer Ausführungsform weist das Haushaltsgerät zumindest eine Beleuchtungseinheit auf und die Beleuchtungseinheit wird von einer Leistungselektronik unter Umgehung des Sicherheitsmoduls mit Strom versorgt. Hierdurch kann die Beleuchtungseinheit auch bei einem kritischen Luftzustand in dem Raum, der ein Abschalten der Abluftvorrichtung erforderlich macht, genutzt werden.

Das Haushaltsgerät weist eine Sicherheitsschaltungsanordnung auf.

Das Haushaltsgerät kann beispielsweise eine Dunstabzugshaube, insbesondere eine Ablufthaube, darstellen. Bei einer Ablufthaube wird Luft aus dem Raum, in dem die Dunstabzugshaube betrieben wird, heraus in die Umgebung befördert. Bei diesen Haushaltsgeräten kann daher, insbesondere bei Präsenz einer offenen Feuerstätte in dem Raum eine ausreichende Versorgung des Raumes mit Zuluft erforderlich sein.

Gemäß einer Ausführungsform besitzt das Haushaltsgerät unterschiedliche Betriebsarten und ein Einstellelement zur Einstellung der Betriebsarten kann von dem Sicherheitsmodul angesteuert werden. So kann insbesondere bei Empfang eines entsprechenden Signals von dem Überwachungssystem von einem Abluftbetrieb auf einen Umluftbetrieb umgeschaltet werden. In diesem Fall wird durch das Unterbrechungselement nicht die Stromzufuhr zu dem Antriebsmotor unterbrochen, sondern beispielsweise eine Klappe zur Luftführung innerhalb der Dunstabzugshaube umgelegt. Hierdurch kann das Haushaltsgerät durch die Integration des Sicherheitsmoduls auf unterschiedliche, den entsprechenden Umgebungsbedingungen angepassten Betriebsarten betrieben werden.

Gemäß einem weiteren Aspekt der Erfindung wird die Aufgabe durch ein Verfahren zum sicheren Betrieb eines Haushaltsgerätes mit einer Abluftvorrichtung zur Abführung von Luft aus einem Raum gelöst. Das Verfahren zeichnet sich dadurch aus, dass die Stromversorgung der Abluftvorrichtung innerhalb des Haushaltsgerätes zumindest teilweise über ein Sicherheitsmodul geleitet wird, das von einem Überwachungssystem zur Überwachung der Luftverhältnisse in dem Raum Signale empfängt.

Vorzugsweise wird bei Erkennen eines kritischen Luftzustandes in dem Raum mittels des Überwachungssystems mindestens ein Unterbrechungselement auf dem Sicherheitsmodul die Stromversorgung zu dem Antriebsmotor der Abluftvorrichtung unterbrochen.

Das Verfahren wird vorzugsweise unter Verwendung einer Sicherheitsschaltungsanordnung durchgeführt.

Die Erfindung wird im Folgenden erneut unter Bezugnahme auf die beiliegenden Figuren erläutert. Es zeigen:
- Fig. 1:: eine schematische Darstellung einer Ausführungsform des erfindungsgemäßen Haushaltsgerätes;
- Fig. 2:: eine schematische Blockdarstellung einer Ausführungsform der erfindungsgemäß verwendeten Sicherheitsschaltungsanordnung;
- Fig. 3:: eine schematische Blockdarstellung einer zweiten Ausführungsform der erfindungsgemäß verwendeten Sicherheitsschaltungsanordnung; und
- Fig. 4:: eine schematische Blockdarstellung einer dritten Ausführungsform der erfindungsgemäß verwendeten Sicherheitsschaltungsanordnung.

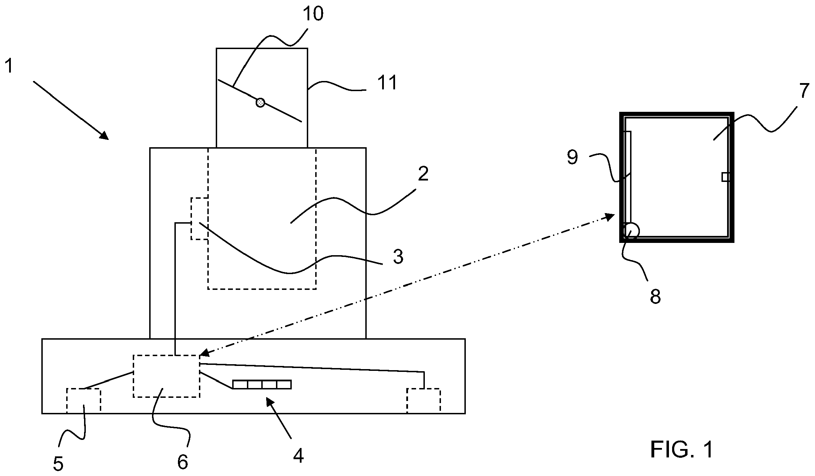

In Figur 1 ist als Haushaltsgerät eine Dunstabzugshaube 1 gezeigt. Der Aufbau von Dunstabzugshauben ist bekannt, so dass in der Figur nur die für die Erfindung wesentlichen Bestandteile der Dunstabzugshaube 1 schematisch gezeigt sind. Im Inneren der Dunstabzugshaube 1 ist das Abluftsystem, das ein Lüftergebläse 2 mit einem Antriebsmotor 3 darstellt, angeordnet. An der Vorderseite der Dunstabzugshaube 1 sind Bedienelemente in Form von Tasten 4 angeordnet. Über diese Tasten 4 kann zum einen das Lüftergebläse 2 angeschaltet und zum anderen eine gewünschte Lüfterstufe des Lüftergebläses 2 eingestellt werden. Weiterhin können über die Tasten 4 Beleuchtungseinrichtungen, insbesondere Lampen 5 angeschaltet werden. Die Tasten 4 sind hierzu mit der Zentralsteuereinheit 6 der Dunstabzugshaube 1 elektrisch verbunden.

Die Zentralsteuereinheit 6 kann an den Antriebsmotor 3 und die Lampen 5 entsprechende Steuersignale leiten beziehungsweise die Komponenten 5 und / oder 3 mit der erforderlichen elektrischen Energie versorgen.

Weiterhin ist in der Figur 1 ein Fenster 7 schematisch angedeutet, dass als Zuluftsystem für das Zuleiten von Zuluft in den Raum, in dem die Dunstabzugshaube 1 betrieben wird, dient. An dem Fenster 7 ist ein Überwachungssystem 8 vorgesehen. Das Überwachungssystem stellt ein Sensorsystem 8 dar. Von dem Sensorsystem 8 werden Signale ausgegeben, die an die Zentralsteuereinheit 6 übermittelt werden. Die Verbindung zwischen dem Sensorsystem 8 und der Zentralsteuereinheit 6 kann eine Kabelverbindung oder eine Funkverbindung sein. In der dargestellten Ausführungsform dient das Sensorsystem 8 dazu den Öffnungszustand des Fensters 7 zu erkennen. Es ist aber auch möglich das Sensorsystem 8 so auszugestalten, dass dieses die Luftqualität in dem Raum erfasst.

Weiterhin ist in Figur 1 an dem Fenster 7 eine Aktorik 9 vorgesehen. Die Aktorik 82 kann beispielsweise einen automatischen Fensteröffner darstellen und kann von der Zentralsteuereinheit 6 der Dunstabzugshaube angesteuert, insbesondere aktiviert, werden.

Die Dunstabzugshaube 1 in Figur 1 stellt eine Ablufthaube dar, die über ein Einstellelement 10 in einen Umluftbetrieb eingestellt werden kann. Das Einstellelement 10 ist in der Figur 1 schematisch als Klappe in dem Abluftstutzen 11 der Dunstabzugshaube 1 gezeigt. Es versteht sich aber, dass die Klappe auch durch andere Einstellelemente, die zur Umschaltung zwischen dem Abluftbetrieb und dem Umluftbetrieb dienen können, ersetzt werden kann und auch an anderen Positionen innerhalb oder an der Dunstabzugshaube 1 vorgesehen sein kann. Das Einstellelement 10 ist ebenfalls mit der Zentralsteuereinheit 6 verbunden und kann über diese angesteuert werden.

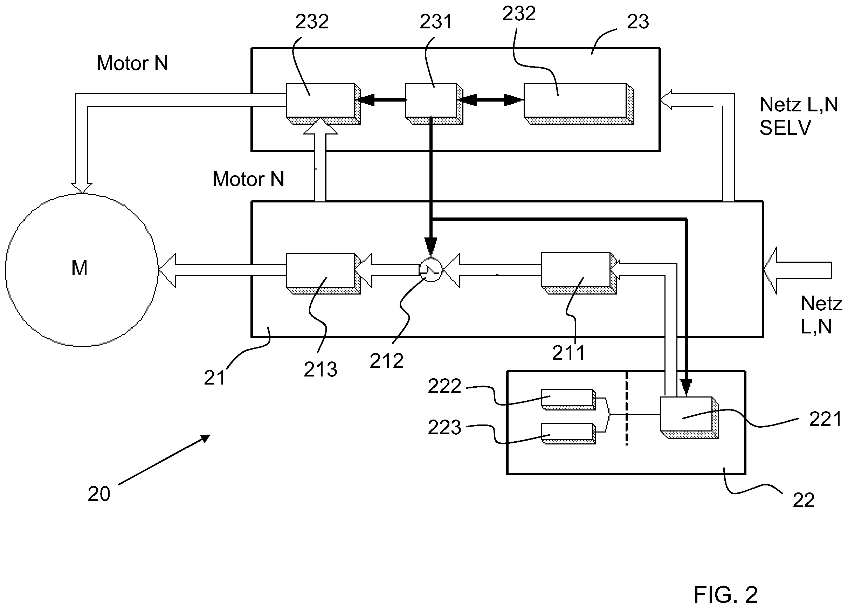

Die Funktionsweise des sicheren Betriebs einer Dunstabzugshaube wird nun unter Bezugnahme auf die Figuren 2 bis 4 genauer erläutert.

In Figur 2 ist eine schematische Blockdarstellung einer Sicherheitsschaltungsanordnung 20 für eine Dunstabzugshaube 1 gezeigt. Die Sicherheitsschaltungsanordnung 20 stellt eine mögliche Ausführungsform des Aufbaus der Zentralsteuereinheit 6 der Dunstabzugshaube 1 in Figur 1 dar. Die Schaltungsanordnung 20 weist einen modularen Aufbau auf und umfasst ein Modul 21 für die Leistungselektronik, ein Bedienmodul 22 und ein Sicherheitsmodul 23. Das Bedienmodul umfasst eine Steuereinheit 221 sowie Ausgabemittel 222 und 223. Durch das Ausgabemittel 222 kann beispielsweise eine akustische Ausgabe einer Warnung mittels Lautsprechern (nicht dargestellt) erfolgen. Über das Ausgabemittel 223 kann hingegen beispielsweise eine optische Ausgabe an einer Anzeigevorrichtung (nicht dargestellt) erfolgen. Weiterhin sind Bedienelemente, beispielsweise in Form der in Figur 1 dargestellten Tasten 4 vorgesehen, die mit der Steuereinheit 221 des Bedienmoduls 22 verbunden sind.

Das Modul 21 für die Leistungselektronik umfasst in der dargestellten Ausführungsform einen Relais-Treiber 211, ein Schaltelement 212, das als Öffner ausgestaltet ist, sowie ein Relais 213, das zur Einstellung einer bestimmten Lüfterstufe des Gebläses 2 der Dunstabzugshaube 1 dient. Statt des Relais 213 können auch mehrere Relais vorgesehen sein, die jeweils zur Einstellung einer bestimmten Lüfterstufe des Gebläses 2 der Dunstabzugshaube 1 dienen. Der Ausgang des Relais 213 liegt an dem Antriebsmotor 3 der Dunstabzugshaube 1 an und bestimmt die Lüfterstufe des durch den Antriebsmotor 3 angetriebenen Gebläses 2.

Auf dem Sicherheitsmodul 23 sind eine Steuereinheit 231 sowie ein Relais 232 vorgesehen. Weiterhin ist eine Empfangseinheit 233 zum Empfang von Signalen eines Sensorsystems 8 vorgesehen, die mit der Steuereinheit 231 verbunden ist, so dass empfangene Signale in der Steuereinheit 231 verarbeitet werden können. Die Empfangseinheit 232 kann auch zum Übermitteln von Steuersignalen an eine Aktorik 9 dienen. Alternativ kann hierfür eine separate Einheit (nicht dargestellt) vorgesehen sein.

In der dargestellten Ausführungsform ist der N-Leiter (Motor N) des Antriebsmotors 3 über das Sicherheitsmodul 23 geführt. Das Sicherheitsmodul 23, insbesondere die Steuereinheit 231 weist zudem einen separaten Steuerausgang zur Abschaltung der Motoransteuerung auf dem Modul 21 der Leistungselektronik auf. Weiterhin weist das Sicherheitsmodul 23 einen Steuerausgang zur Information der Leistungselektronik auf dem Modul 21 und/ oder der Bedienelektronik auf dem Bedienmodul 22 auf. Der Steuerausgang kann zur aktiven Abschaltung der Lüfterfunktion und/oder zur Anzeige des Zustandes und/oder der Ausgabe einer Warnung durch Optik/Akustik dienen. Der Steuerausgang kann von der Elektronik, insbesondere in der Steuereinheit 221 des Bedienmoduls 22 in eine optische/aktustische Anzeige über den aktuellen Zustand, beispielsweise "Lüften möglich" oder "Lüften nicht möglich" gewandelt werden und über entsprechende Vorrichtungen 222, 223 ausgegeben werden

In der dargestellten Ausführungsform in Figur 2 ist nur ein Netzanschluss zur Versorgung des Moduls 21 für die Leistungselektronik und des Sicherheitsmoduls 23 vorgesehen.

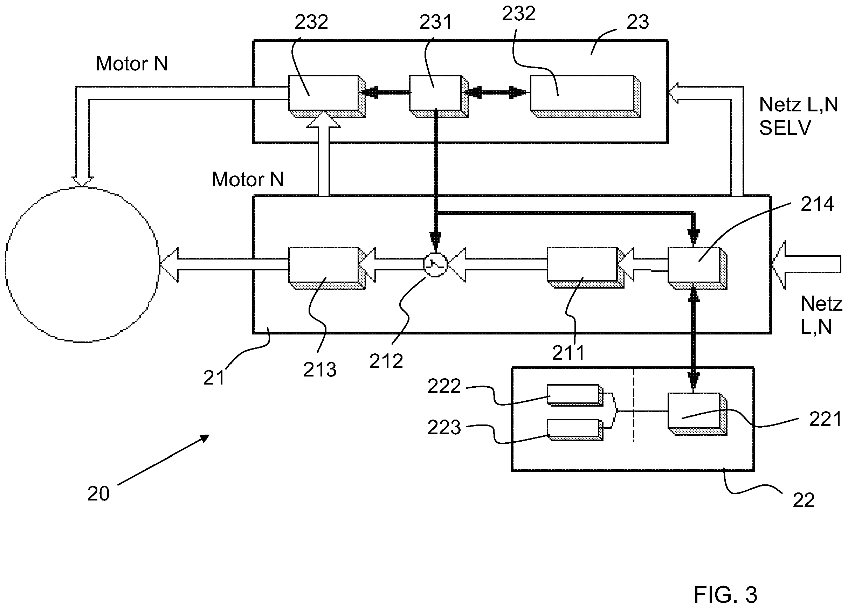

Die Ausführungsform der Sicherheitsschaltungsanordnung in Figur 3 unterscheidet sich von der in Figur 2 gezeigten Ausführungsform nur dadurch, dass hierbei auch auf dem Modul 21 für die Leistungselektronik eine Steuereinheit 214 vorgesehen ist, die mit der Steuereinheit 221 und der Steuereinheit 231 verbunden ist, so dass über den Steuerausgang der Steuereinheit 231 zum einen die Leistungselektronik und zum anderen die Bedienelektronik informiert werden können. Die weiteren Bestandteile entsprechen denen bereits unter Bezugnahme auf Figur 2 beschriebenen und sind mit den gleichen Referenzeichen versehen.

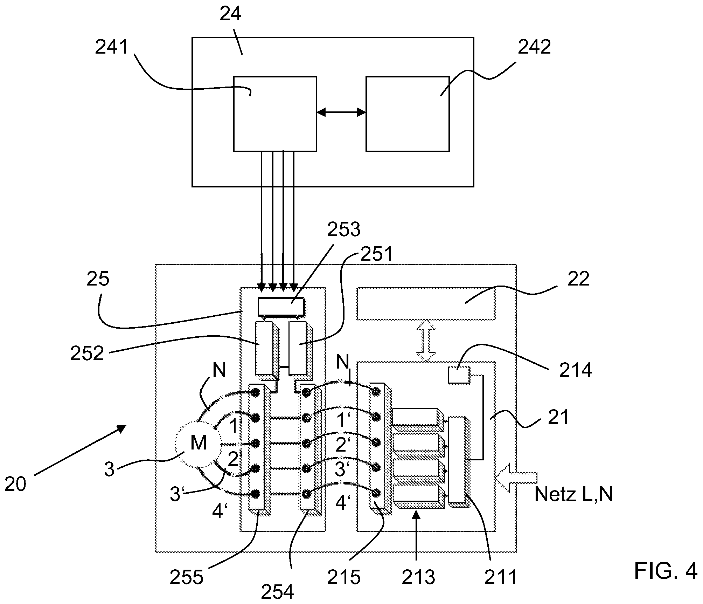

In Figur 4 ist schließlich eine dritte Ausführungsform der Sicherheitsschaltanordnung 20 gezeigt. Diese unterscheidet sich im Wesentlichen dadurch, dass das Sicherheitsmodul aus zwei Modulen 24, 25 besteht, wobei ein Sicherheitsmodul 24 eine Steuereinheit 241 und eine Empfangseinheit 242 für den Empfang von Signalen eines Sensorsystems 8 aufweist. Das weitere Sicherheitsmodul 25 umfasst Anschlüsse für die Leiter N eines Versorgungskabels sowie Winkelanzapfungen 1'-4' des Antriebsmotors M. Die Winkelanzapfungen 1'-4' werden auf dem Sicherheitsmodul 25 durchgeschleift, wohingegen der N-Leiter auf dem Sicherheitsmodul 25 über zwei hintereinander geschaltete Relais 251, 252 geführt wird. Bei diesen Relais handelt es sich um Schließer, d.h. NO-Relais. Der N-Leiter wird somit nur dann geschlossen und der Motor 3 angetrieben, wenn die beiden Relais 251, 252 jeweils ein Signal von dem Relaistreiber 253 erhalten, dass den Betrieb erlaubt.

Das Sicherheitsmodul 25, das auch als Sicherheitsschaltungsmodul bezeichnet werden kann, ist in der dargestellten Ausführungsform über vier separate Kabel Ub, GND, S1, S2 mit der Steuereinheit 241 auf dem Sicherheitsmodul 24 verbunden. Über diese Kabel können die Sicherheitsrelais 251, 252 auf dem Sicherheitsmodul 25 angesteuert werden.

Auf dem Modul 21 für die Leistungselektronik sind bei dieser Ausführungsform eine Steuereinheit 214, ein Relaistreiber 211, sowie vier den unterschiedlichen Lüfterstufen zugeordneten Relais 213, 213', 213" und 213"' angeordnet. Die Anschlussleiste 215 für die Kabel N und 1'-4' entspricht in der Belegung und dem Stecksystem der Anschlussleisten 254 und 255 den auf dem Sicherheitsschaltmodul 25. Eine Verbindung zwischen einem der Sicherheitsmodule 24 oder 25 und dem ebenfalls vorgesehenen Bedienmodul 22 sind bei dieser Ausführungsform nicht dargestellt, können aber beispielsweise über Funkverbindung vorhanden sein, so dass auch bei dieser Ausführungsform Warnungen oder andere Anzeigen erfolgen können.

Es ist möglich das Sicherheitsmodul 24 und das Sicherheitsschaltungsmodul 25 durch ein einfaches Abziehen des Motoranschlusses von dem Modul 21 für die Leistungselektronik, Einstecken in die Anschlüsse 255 des Sicherheitsschaltungsmoduls 25 und Verbinden der Anschlüsse 215 des Moduls 21 für die Leistungselektronik mit den Eingängen 254 an dem Sicherheitsschaltmodul 25 mittels eines Brückungskabels, in die Stromführung zu integrieren. Eine Manipulation des Kabelbaums des Motors, insbesondere ein separates Herausführen des N-Leiters ist bei dieser Ausführungsform gegenüber den in den Figuren 2 und 3 gezeigten Ausführungsformen nicht notwendig.

Wird eine Schaltungsanordnung 20, die in den Figuren 2 bis 4 gezeigt sind, in einer Dunstabzugshaube 1, beispielsweise gemäß Figur 1 in der Zentralsteuereinheit 6 eingesetzt, so ist ein sicherer Betrieb des Dunstabzugshaube gewährleistet.

Beim Betrieb von Abzugsvorrichtungen muss sicher gestellt werden, dass diese den formellen Anforderungen von Normen, wie beispielsweise EN 60335 für Dunstabzugshauben entspricht. Durch die in den Normen hinterlegten Vorschriften soll vermieden werden, dass es beim Betrieb einer Anzugsvorrichtung in einem Raum mit einer Feuerstelle oder einer anderen Quelle, die zur Erzeugung von CO führt, zu einem Unterdruck kommt.

Nach der Musterfeuerstättenverordnung (M-FeuVO) §4, die das Aufstellen von Feuerstätten behandelt, ist bei gleichzeitigem Betrieb von raumluftabhängigen Feuerstätten, wie beispielsweise Gasherde, Öl-, Holz- oder Kohleöfen, und einem Abluftgerät, wie beispielsweise einer Dunstabzugshaube, Wohnungsbe- und Entlüftungsanlagen, Abluftwäschetrocker und der gleichen, sicher zu stellen, dass kein gefährlicher Unterdruck entsteht. Zudem ist nach einer Norm EN 60335-1:2001, Amendment 1:2004-03 eine in eine Dunstabzugshaube zu integrierende Lösung dieser Anforderung entsprechend von Richtlinien, wie beispielsweise IEC 61508 bezüglich funktioneller Sicherheit, und weitere Normen, wie EN 60730 betreffend automatische elektrische Regel- und Steuergeräte für den Hausgebrauch und ähnliche Anwendungen, zu berücksichtigen.

Diesen Anforderungen genügt die vorliegende Erfindung.

Durch das Sensorsystem 8 wird der Öffnungsgrad eines Fensters 7 überwacht. Alternativ kann das Sensorsystem 8 auch Drucksensoren umfassen, die den in dem Raum herrschenden Druck messern. Diese Sensoren können an der Dunstabzugshaube 1 vorgesehen sein. Die vorliegende Erfindung ist nicht auf die Verwendung einer bestimmten Sensorart oder Sensoranordnung beschränkt.

Durch die Sensorik beziehungsweise das Sensorsystem 8 kann gefährlicher Unterdruck erkannt werden kann. Handelt es sich bei dem Sensor um einen an einem Fenster 7 oder einer anderen Zuluftvorrichtung angeordneten Sensor, kann hierüber die Gewährleistung von Zuluft erkannt werden. Wird von dem Sensorsystem 8 ein Signal abgegeben, das anzeigt, dass entweder die Zuluftvorrichtung inaktiv, d.h. beispielsweise das Fenster 7 geschlossen ist, oder dass der Druck in dem Raum in einem kritischen Bereich liegt, so wird dieses Signal an die Steuereinheit 231, 241 des Sicherheitsmoduls 23, 24 übermittelt.

Bei den in Figur 2 und 3 gezeigten Ausführungsformen wird das Signal an die Steuereinheit 231 geleitet und das Relais 232 für den Motor N, das an dem Ausgang der Steuereinheit 231 anliegt, wird geöffnet. Zudem wird über einen separaten Steuerausgang der Steuereinheit 231 auf dem Modul 21 der Leistungselektronik die Motoransteuerung abgeschaltet. Durch diese beiden Unterbrechungselemente wird selbst bei Ausfall eines der Unterbrechungselemente ein sicheres Abschalten der Lüfterfunktion der Dunstabzugshaube gewährleistet.

Da die Sicherheitsschaltungsanordnung 20 in der Stromführung und Steuerung der Dunstabzugshaube 1 integriert ist, kann bei Erkennen des Anschaltens der Dunstabzugshaube 1 und bei einem Signal des Sensorsystems 8, das anzeigt, dass die Umgebungsbedingungen kritisch sind oder eine Zuluftvorrichtung 7 nicht aktiv ist, eine Aktorik 9 angesteuert werden. Die Ansteuerung kann von der Steuereinheit 231 des Sicherheitsmoduls 23 erfolgen. In diesem Fall kann beispielsweise die Zuluftvorrichtung 7 aktiviert, insbesondere das Fenster 7 über die Aktorik 9, die als automatischer Fensteröffner ausgestaltet sein kann, geöffnet werden. Somit kann eine Klappe einer Zuluftvorrichtung 7 angesteuert werden, wenn der Unterdruck einen gewissen Wert erreicht und dadurch das Erreichen eines Schwellwertes verhindert werden. Erst wenn das Sensorsystem 8 anschließend ein Signal ausgibt, dass die Umgebungsbedingungen unkritisch sind, werden die Unterbrechungselemente 232 und 212 so angesteuert, dass der Betrieb der Dunstabzugshaube 1 ermöglicht ist. Die Kommunikation zwischen der Sensorik 8 beziehungsweise der Aktorik 9 und dem Sicherheitsmodul 23 kann mittels einer Kabelverbindung oder mittels Funk geschehen.

Alternativ oder zusätzlich zu der Ansteuerung einer Aktorik 9 zum Öffnen einer Zuluftvorrichtung 7, kann über die Steuerungseinheit 231 eine Einstellvorrichtung 10 an der Dunstabzugshaube 1 angesteuert werden, wenn das Signal des Sensorsystems 8 den Betrieb der Dunstabzugshaube 1 nicht zulassen würde, aber der Benutzer die Dunstabzugshaube 1 betätigt. In diesem Fall kann beispielsweise die Luftführung über das Einstellelement 10 so verändert werden, dass die Dunstabzugshaube 1 statt um Abluftbetrieb im Umluftbetrieb arbeitet. Sobald die Umstellung der Betriebsart erfolgt ist, kann der Motor 3 betrieben werden, obwohl das Signal des Sensorsystems 8 den Betrieb der Dunstabzugshaube 1 eigentlich verneint.

Wird die Sicherheitsanordnung nach Figur 3 in die Dunstabzugshaube nach Figur 1 integriert, so können die Betätigung der Dunstabzugshaube 1 und das sichere Verhindern des Abluftbetriebes oder des Gesamtbetriebes des Lüftergebläses 2 entsprechend ausgeführt werden.

Wie sich aus dem Vorstehenden ergibt kann die separate Abschaltung der Lüfterfunktion über das Totlegen (nach Masse / Vdd) des Basisstroms (bei einer Transistor-Verstärkerschaltung) und/oder über das Deaktivieren eines Treiberbausteins (Enable/disable EingangX) funktionieren.

Die aktive Abschaltung der Lüfterfunktion kommt über die Steuerelektronik zustande. Ist das Signal auf "Betrieb erlaubt" gestellt, können Lüfterstufen aktiviert werden. Sobald das Signal auf "Betrieb verboten" wechselt, werden mögliche Lüfterstufen deaktiviert und es ist keine Aktivierung mehr zugelassen.

Bei einer Sicherheitsschaltungsanordnung 20 nach Figur 4 ist der Verfahrensablauf zur Verhinderung von Gefahrensituationen abweichend zu dem unter Bezugnahme auf die Figuren 2 und 3 beschriebenen Verfahren. Auch bei der dritten Ausführungsform der Sicherheitsschaltungsanordnung 20 wird an der Steuereinheit 241 des Sicherheitsmoduls 24 ein Signal von einem Sensorsystem 8 empfangen und zur Ansteuerung der auf dem Sicherheitsschaltungsmodul 25 angeordneten Relais 251, 252 verwendet. Allerdings handelt es sich bei den dargestellten Relais um NO-Relais. Nur wenn von der Steuereinheit 241 ein Steuerausgang ausgegeben wird, der unkritische Bedingungen wiedergibt oder das Öffnen einer Zuluftöffnung erkannt wurde, werden die Relais 251, 252 geschlossen und der Antriebsmotor 3 kann angesteuert werden. Auch mit dieser Sicherheitsschaltungsanordnung 20 kann beispielsweise eine Aktorik 9 verbunden sein, die ein Öffnen einer Zuluftvorrichtung 7 erlaubt. Auch ein Umschalten des Betriebszustandes der Dunstabzugshaube 1 von Abluft auf Umluft kann mit diese Anordnung realisiert werden. Das Bedienmodul 22 kann mit der Leistungselektronik 21 und dem Sicherheitsmodul 24 über Kabel oder über Funk verbunden sein.

Der Vorteil der in Figur 4 gezeigten Ausführungsform liegt darin, dass die Sicherheitsmodule 24 und 25 separat von der weiteren Elektronik 21, 22 der Dunstabzugshaube 1 auf einfache Weise beurteilt und approbiert werden können, da diese absolut unabhängig von den Steuerungsvarianten sind. Zudem können die Sicherheitsmodule 24, 25 dieser Ausführungsform besonders leicht in eine Dunstabzugshaube 1 nachgerüstet werden.

Als zusätzliche Sicherheitsmaßnahme kann der Strom auf dem Sicherheitsmodul 23, 24, 25 durch geeignete Messvorrichtungen gemessen werden, um die Abschaltung des Motors 3 kontrollieren zu können. Hierbei handelt es sich um eine Funktionskontrolle des Sicherheitsmoduls 23, 24, 25, wodurch die Sicherheit des gesamten Systems weiter erhöht wird.

Obwohl in den beiliegend dargestellten Ausführungsformen als Steuereinheiten Mikroprozessoren angedeutet sind, ist es erfindungsgemäß aber auch möglich, dass die von diesen Steuereinheiten durchzuführenden Aktionen durch andere Elektronik-Komponenten realisiert werden.

Die vorliegende Erfindung kann auch in einer anderen Absaugvorrichtung als einer Dunstabzugshaube realisiert werden, beispielsweise einer Klimaanlage.

Die Sicherheitsschaltungsanordnung kann mit einem einzigen Netzanschluss versehen sein. Es ist aber auch möglich, dass die Sicherheitsschaltungsanordnung über zwei Netzanschlüsse versorgt wird. Außer Netzanschlüssen kommen auch ein oder mehrere Niedervoltzweige in betracht. Das Sicherheitsmodul kann hierbei separat an die Netzversorgung oder Niedervoltzweige angeschlossen sein.

Die Sicherheitsschaltungsanordnung kann bei der Herstellung der Absaugvorrichtung beziehungsweise des Haushaltsgerätes in dieses integriert werden. Es ist aber auch möglich, das Sicherheitsmodul als Nachrüstsatz auszubilden, der an handelsüblichen Abzugssystemen nachträglich vorgesehen werden kann.

Durch das erfindungsgemäße System wird ein sicheres Verhindern des Betriebs des Lüftermotors oder Abluftmotors bei Gefahrensituationen gewährleistet.

## Patentansprüche

1. Haushaltsgerät mit einer Vorrichtung zur Abführung von Luft aus einem Raum, insbesondere Dunstabzugshaube, mit einer Sicherheitsschaltungsanordnung, die eine Leistungselektronik für die Abluftvorrichtung (2) und mindestens ein Sicherheitsmodul (23, 24, 25) umfasst, das mit einem Überwachungssystem (8) zur Überwachung der Luftverhältnisse in dem Raum, in dem das Haushaltsgerät (1) betrieben wird, verbunden ist, und das mindestens ein Unterbrechungselement (232, 251, 252) aufweist, **dadurch gekennzeichnet, dass** das Sicherheitsmodul (23, 24, 25) in die Stromführung und/oder Steuerung innerhalb des Haushaltsgerätes (1) integriert ist.

2. Haushaltsgerät nach Anspruch 1,
**dadurch gekennzeichnet, dass** dieses zumindest eine Beleuchtungseinheit (5) aufweist und die Beleuchtungseinheit (5) von einer Leistungselektronik unter Umgehung des Sicherheitsmoduls (23, 24, 25) mit Strom versorgt wird.

3. Haushaltsgerät nach Anspruch 1, **dadurch gekennzeichnet, dass** das Sicherheitsmodul (23, 24, 25) mit einem Modul (21) für die Leistungselektronik verbunden ist.

4. Haushaltsgerät nach Anspruch 1 oder 3, **dadurch gekennzeichnet, dass** das Sicherheitsmodul (23, 24, 25) der Leistungselektronik der Abluftvorrichtung (2) nachgeschaltet ist.

5. Haushaltsgerät nach einem der Ansprüche 1, 3 oder 4, **dadurch gekennzeichnet, dass** diese ein Bedienmodul (22) zur Bedienung der Abluftvorrichtung (2) aufweist und das Bedienmodul (22) mittelbar oder unmittelbar mit dem Sicherheitsmodul (23, 24, 25) verbunden ist.

6. Haushaltsgerät nach einem der Ansprüche 1, 3, 4 oder 5, **dadurch gekennzeichnet, dass** nur ein Teil der Leiter (N, 1', 2', 3', 4') der Stromführung, insbesondere der N-Leiter (N), über das Sicherheitsmodul (23) geführt wird.

7. Haushaltsgerät nach einem der Ansprüche 1 oder 3 bis 6, **dadurch gekennzeichnet, dass** alle an einem Antriebsmotor (3) der Abluftvorrichtung (2) anliegenden Leiter (N, 1', 2', 3', 4') über das Sicherheitsmodul (25) geführt werden, auf dem für einen der Leiter (N, 1', 2', 3', 4'), insbesondere den N-Leiter (N), mindestens ein Unterbrechungselement (251, 252) vorgesehen ist.

8. Haushaltsgerät nach Anspruch 1 oder 3 bis 7, **dadurch gekennzeichnet, dass** die Belegung der Anschlüsse (255, 254) auf dem Sicherheitsmodul (25) und die Belegung der Anschlüsse (215) auf einem Modul (21) der Leistungselektronik identisch ist.

9. Haushaltsgerät nach einem der Ansprüche 1 oder 3 bis 8, **dadurch gekennzeichnet, dass** das Sicherheitsmodul (25) zumindest zwei Unterbrechungselemente (251, 252) aufweist, die jeweils einen Eingang für Signale des Überwachungssystems (8) zur Überwachung der Luftverhältnisse aufweisen.

10. Haushaltsgerät nach einem der Ansprüche 1 oder 3 bis 9, **dadurch gekennzeichnet, dass** das Sicherheitsmodul (23, 24, 25) eine Steuerungseinheit (231, 241) aufweist.

11. Haushaltsgerät nach einem der Ansprüche 1 oder 3 bis 10, **dadurch gekennzeichnet, dass** das Sicherheitsmodul (23, 24, 25) und zumindest ein Bedienmodul (22) jeweils eine Steuerungseinheit (231, 241, 221) aufweisen.

12. Haushaltsgerät nach einem der Ansprüche 1 oder 3 bis 11, **dadurch gekennzeichnet, dass** das Sicherheitsmodul (23, 24, 25) mit einer Einstellvorrichtung (10) zur Einstellung der Betriebsart des Haushaltsgerätes (1), insbesondere zur Einstellung der Luftführung in dem Haushaltsgerät (1), verbunden ist.

13. Haushaltsgerät nach einem der Ansprüche 1 oder 3 bis 12, **dadurch gekennzeichnet, dass** das Sicherheitsmodul (23, 24, 25) mit einer Aktorik (9) zum Betätigen einer Zuluftvorrichtung (7) verbunden ist.

14. Haushaltsgerät nach einem der Ansprüche 1 bis 13, **dadurch gekennzeichnet, dass** das Haushaltsgerät (1) eine Dunstabzugshaube, insbesondere eine Ablufthaube, darstellt.

15. Haushaltsgerät nach einem der Ansprüche 1 bis 14, **dadurch gekennzeichnet, dass** dieses unterschiedliche Betriebsarten besitzt und ein Einstellelement (10) zur Einstellung der Betriebsarten von dem Sicherheitsmodul (23, 24, 25) angesteuert werden kann.

## Claims

1. Household appliance having a device for discharging air from a space, in particular an extractor hood, having a safety circuit arrangement which comprises power electronics for the exhaust air device (2) and at least one safety module (23, 24, 25) which is connected to a monitoring system (8) for monitoring the air conditions in the space in which the household appliance (1) is operated, and which has at least one interruption element (232, 251, 252), **characterised in that** the safety module (23, 24, 25) is integrated into the current feed and/or control unit within the household appliance (1).

2. Household appliance according to claim 1, **characterised in that** it has at least one illumination unit (5), and the illumination unit (5) is supplied with current by power electronics, bypassing the safety module (23, 24, 25).

3. Household appliance according to claim 1, **characterised in that** the safety module (23, 24, 25) is connected to a module (21) for the power electronics.

4. Household appliance according to one of claims 1 or 3, **characterised in that** the safety module (23, 24, 25) is connected downstream of the power electronics of the exhaust air device (2).

5. Household appliance according to one of claims 1, 3 or 4, **characterised in that** it has an operating control module (22) for operating the exhaust air device (2) and the operating module (22) is connected directly or indirectly to the safety module (23, 24, 25).

6. Household appliance according to one of claims 1, 3, 4 or 5, **characterised in that** only some of the conductors (N, 1', 2', 3', 4') of the current feed, in particular the N conductor (N), are routed via the safety module (23).

7. Household appliance according to one of claims 1 or 3 to 6, **characterised in that** all conductors (N, 1', 2', 3', 4') adjacent to a drive motor (3) of the exhaust air device (2) are routed via the safety module (25), on which at least one interruption element (251, 252) is provided for one of the conductors (N, 1', 2', 3', 4'), in particular the N conductor (N).

8. Household appliance according to claim 1 or 3 to 7, **characterised in that** the assignment of the ports (255, 254) on the safety module (25) and the assignment of the ports (215) on a module (21) of the power electronics is identical.

9. Household appliance according to one of claims 1 or 3 to 8, **characterised in that** the safety module (25) has at least two interruption elements (251, 252), each having an input for signals of the monitoring system (8) for monitoring the air conditions.

10. Household appliance according to one of claims 1 or 3 to 9, **characterised in that** the safety module (23, 24, 25) has a control unit (231, 241).

11. Household appliance according to one of claims 1 or 3 to 10, **characterised in that** the safety module (23, 24, 25) and at least one operating module (22) each have a control unit (231, 241, 221).

12. Household appliance according to one of claims 1 or 3 to 11, **characterised in that** the safety module (23, 24, 25) is connected to an adjusting device (10) for adjusting the operating mode of the household appliance (1), in particular for adjusting the air supply in the household appliance (1).

13. Household appliance according to one of claims 1 or 3 to 12, **characterised in that** the safety module (23, 24, 25) is connected to an actuator system (9) for actuating an air supply device (7).

14. Household appliance according to one of claims 1 to 13, **characterised in that** the household appliance (1) is an extractor hood, in particular an exhaust hood.

15. Household appliance according to one of claims 1 to 14, **characterised in that** it has different operating modes and an adjusting element (10) for adjusting the operating modes can be controlled by the safety module (23, 24, 25).

## Revendications

1. Appareil ménager comprenant un dispositif d'évacuation d'air hors d'une pièce, notamment une hotte aspirante, comprenant un agencement de circuit de sécurité qui comprend une électronique de puissance pour le dispositif d'évacuation d'air (2) et au moins un module de sécurité (23, 24, 25) qui est relié à un système de surveillance (8) destiné à surveiller les conditions de l'air dans la pièce dans laquelle l'appareil ménager (1) fonctionne, et qui présente au moins un élément de coupure (232, 251, 252), **caractérisé en ce que** le module de sécurité (23, 24, 25) est intégré à l'intérieur de l'appareil ménager (1), dans le guidage d'air et/ou dans la commande.

2. Appareil ménager selon la revendication 1, **caractérisé en ce que** celui-ci présente au moins une unité d'éclairage (5) et **en ce que** l'unité d'éclairage (5) est alimentée en courant par une électronique de puissance par contournement du module de sécurité (23, 24, 25).

3. Appareil ménager selon la revendication 1, **caractérisé en ce que** le module de sécurité (23, 24, 25) est relié à un module (21) pour l'électronique de puissance.

4. Appareil ménager selon la revendication 1 ou 3, **caractérisé en ce que** le module de sécurité (23, 24, 25) de l'électronique de puissance est installé en aval du dispositif d'évacuation d'air (2).

5. Appareil ménager selon l'une quelconque des revendications 1, 3 ou 4 **caractérisé en ce que** celui-ci présente un module de commande (22) pour la commande du dispositif d'évacuation d'air (2) et **en ce que** le module de commande (22) est relié indirectement ou directement au module de sécurité (23, 24, 25).

6. Appareil ménager selon l'une quelconque des revendications 1, 3 ,4 ou 5, **caractérisé en ce que** seulement une partie des conducteurs (N, 1', 2', 3', 4') du guidage de courant, notamment le conducteur N (N), est menée par l'intermédiaire du module de sécurité (23).

7. Appareil ménager selon l'une quelconque des revendications 1 ou 3 à 6, **caractérisé en ce que** tous les conducteurs (N, 1', 2', 3', 4') appliqués sur un moteur d'entraînement (3) du dispositif d'évacuation d'air (2) sont menés par l'intermédiaire du module de sécurité (25), sur lequel au moins un élément de coupure (251, 252) est ménagé pour l'un des conducteurs (N, 1', 2', 3', 4'), notamment le conducteur N (N).

8. Appareil ménager selon l'une quelconque des revendications 1 ou 3 à 7, **caractérisé en ce que** l'affectation des connexions (255, 254) sur le module de sécurité (25) et l'affectation des connexions (215) sur un module (21) de l'électronique de puissance sont identiques.

9. Appareil ménager selon l'une quelconque des revendications 1 ou 3 à 8, **caractérisé en ce que** le module de sécurité (25) présente au moins deux éléments de coupure (251, 252) qui présentent respectivement une entrée pour des signaux du système de surveillance (8) destiné à surveiller les conditions de l'air.

10. Appareil ménager selon l'une quelconque des revendications 1 ou 3 à 9, **caractérisé en ce que** le module de sécurité (23, 24, 25) présente une unité de commande (231, 241).

11. Appareil ménager selon l'une quelconque des revendications 1 ou 3 à 10, **caractérisé en ce que** le module de sécurité (23, 24, 25) et au moins un module de commande (22) présentent respectivement une unité de commande (231, 241, 221).

12. Appareil ménager selon l'une quelconque des revendications 1 ou 3 à 11, **caractérisé en ce que** le module de sécurité (23, 24, 25) est relié à un dispositif de réglage (10) destiné au réglage du mode de fonctionnement de l'appareil ménager (1), notamment au réglage du guidage d'air dans l'appareil ménager (1).

13. Appareil ménager selon l'une quelconque des revendications 1 ou 3 à 12, **caractérisé en ce que** le module de sécurité (23, 24, 25) est relié à des actionneurs (9) destinés à actionner un dispositif d'amenée d'air (7).

14. Appareil ménager selon l'une quelconque des revendications 1 à 13, **caractérisé en ce que** l'appareil ménager (1) représente une hotte aspirante, notamment une hotte à évacuation d'air.

15. Appareil ménager selon l'une quelconque des revendications 1 à 14, **caractérisé en ce que** celui-ci possède différents modes de fonctionnement et **en ce qu'**un élément de réglage (10) destiné au réglage des modes de fonctionnement peut être commandé par le module de sécurité (23, 24, 25).
